# EUROPÄISCHE PATENTSCHRIFT

(11) **EP 3 126 172 B1**
(45) Veröffentlichungstag und Bekanntmachung des Hinweises auf die Patenterteilung: **29.04.2020**
(21) Anmeldenummer: 15714201.9
(22) Anmeldetag: 31.03.2015
(51) Int. Cl.: B60K 1/00, F16H 3/089, F16H 57/00, F16H 57/04, F16H 63/30

(54) **ANTRIEBSANORDNUNG FÜR EIN KRAFTFAHRZEUG**
DRIVE ARRANGEMENT FOR A MOTOR VEHICLE
ENSEMBLE D'ENTRAÎNEMENT POUR UN VÉHICULE À MOTEUR

(30) Priorität: 04.04.2014 WO PCT/EP2014/056861
(43) Veröffentlichungstag der Anmeldung: 08.02.2017
(73) Patentinhaber: GKN Automotive Limited, Redditch Worcestershire B98 0AJ (GB)
(72) Erfinder: KRAMER, Fred, 53343 Wachtberg (DE); SCHMIDT, Mark, 53639 Königswinter (DE); MERTENS, Ralph, 41564 Kaarst (DE); MARKS, Jiri, 53773 Hennef (DE); ALTENRATH, Thomas, 53721 Siegburg (DE); GASSMANN, Theodor, 53721 Siegburg (DE)
(74) Vertreter: Neumann Müller Oberwalleney & Partner Patentanwälte
(86) Internationale Anmeldenummer: PCT/EP2015/057078
(87) Internationale Veröffentlichungsnummer: WO 2015/150407

(56) Entgegenhaltungen:
- WO-A1-2012/088860
- DE-A1-102007 045 368
- DE-A1-102012 204 717
- FR-A1- 2 976 526
- JP-A- 2007 078 033
- US-A- 4 494 638
- US-A- 5 667 036

## Beschreibung

Die Erfindung betrifft eine Antriebsanordnung für ein Kraftfahrzeug, insbesondere für einen Elektroantrieb, sowie ein Kraftfahrzeug mit einer solchen Antriebsanordnung. Ein Elektroantrieb kann als alleiniger Antrieb für das Kraftfahrzeug dienen oder es kann zusätzlich ein Verbrennungsmotor vorgesehen sein. In diesem Fall können der Elektroantrieb und der Verbrennungsmotor jeweils für sich oder gemeinsam überlagert das Kraftfahrzeug antreiben. Derartige Antriebskonzepte werden auch als "Hybridantrieb" bezeichnet.

Üblicherweise umfasst ein Elektroantrieb einen Elektromotor sowie ein nachgelagertes Untersetzungsgetriebe, das eine Drehbewegung vom Schnellen ins Langsame übersetzt. Vom Untersetzungsgetriebe wird das Drehmoment auf den Antriebsstrang des Kraftfahrzeugs übertragen. Hierfür teilt ein dem Untersetzungsgetriebe im Drehmomentfluss nachgelagertes Differentialgetriebe das eingeleitete Drehmoment auf zwei Ausgangswellen zum Antreiben der Fahrzeugräder auf. Die beiden Ausgangswellen des Differentialgetriebes haben untereinander eine ausgleichende Wirkung, das heißt dreht eine der beiden Ausgangswellen schneller, so dreht die andere Ausgangswelle entsprechend langsamer, und umgekehrt.

Aus der FR 2 976 526 A1 ist ein Antriebsaggregat mit zwei Elektromotoren, zwei primären Antriebswellen, zwei Zwischenwellen, zwei Untersetzungsgetrieben und einem Differentialgetriebe bekannt. Jedes der beiden Untersetzungsgetriebe ist mit dem Differentialgetriebe antriebsverbunden, so dass beide Untersetzungsgetriebe Drehmoment auf das Differentialgetriebe übertragen können. Zwischen jeder Antriebswelle und der zugehörigen Zwischenwelle sind zwei schaltbare Rädersätze mit unterschiedlichen Übersetzungen vorgesehen. Eine Synchronisiervorrichtung ist zwischen den Rädersätzen angeordnet.

Aus der DE 10 2007 045 368 A1 sind ein Verfahren und eine Vorrichtung zur Beölung der Axialanläufe von Lösrädern bekannt, die auf einer Welle drehbar gelagert sind. Zwischen zwei drehbaren Lösrädern ist ein Synchronkörper vorgesehen, der drehfest mit der Welle verbunden ist. Der Synchronkörper hat seitliche Anläufe, gegen welche die beiden Lösräder axial abgestützt sind. Die Beölung der Axialanläufe erfolgt mittels Ölzufuhr durch eine in der Welle axial verlaufende Bohrung und hiervon ausgehende radiale Bohrungen sowie über fluidtechnisch mit den Bohrungen verbundene und am Axialanlauf des Synchronkörpers angebrachte Nuten. Die radialen Bohrungen sind axial im Bereich der Lösräder vorgesehen.

Aus der US 4 494 638 B ist eine Synchronisiervorrichtung bekannt, die einen mit einer Antriebswelle drehfest verbundenen Muffenträger aufweist und zwei Synchronisationsringe. Die Welle hat eine radiale Bohrung, welche in eine Ringnut des Muffenträgers mündet. Von der Ringnut erstrecken sich im Muffenträger V-förmige Bohrungen, die radial außen in den seitlichen Kammern münden, in denen die konischen Synchronringe angeordnet sind, um diese mit Schmiermittel zu versorgen.

Aus der JP 2007-78033 A ist eine Schalteinheit mit einer Hohlwelle, einer hiermit drehfest verbundenen Kupplungsnabe und zwei auf der Hohlwelle drehbar gelagerten Rädern bekannt. Die Kupplungsnabe kann mittels einer Synchronisierung wahlweise mit einem der beiden Räder zur Drehmomentübertragung verbunden werden. Die Kupplungsnabe ist mittels einer Wellenverzahnung drehfest mit der Hohlwelle verbunden und axial gegen eine Schulter abgestützt. Die Hohlwelle weist mehrere Querbohrungen auf, durch die Schmiermittel zum Verzahnungsbereich zwischen Hohlwelle und Kupplungsnabe sowie den Lagerabschnitten der Räder fließen kann.

Aus der US 5 667 036 B ist ein Schmiersystem mit einer Pumpe und mehreren Hohlwellen mit Querbohrungen bekannt. Die Pumpe fördert Schmiermittel zu endseitig der Hohlwellen angeordneten Auslaufrohren, welche in die jeweilige Hohlwelle münden.

Aus der DE 10 2012 204 717 A1 ist eine elektromotorische Antriebseinrichtung für ein Kraftfahrzeug bekannt mit einer ersten elektrischen Maschine mit einer ersten Antriebswelle, einer zweiten elektrischen Maschine mit einer zweiten Antriebswelle und einer Getriebeeinrichtung mit einem Planetensatz, einem Stirnradgetriebe und einem Abtrieb. Das Stirnradgetriebeweist einen ersten Radsatz mit einer ersten Übersetzung, einen zweiten Radsatz mit einer zweiten Übersetzung und eine Schalteinheit auf. Die Schalteinheit ist in eine erste Schaltstellung schaltbar, in der das erste Zahnrad des ersten Radsatzes mit der ersten Antriebswelle verbunden ist, und in eine zweite Schaltstellung, in der das erste Zahnrad des zweiten Radsatzes mit der ersten Antriebswelle verbunden ist.

Aus der FR 2 946 292 A3 ist ein Antriebsaggregat mit einem Elektromotor, einem Untersetzungsgetriebe mit zwei parallelen Wellen und einem Differentialgetriebe bekannt. Das Untersetzungsgetriebe weist zwei Radsätze zur Übertragung von Drehmoment zwischen den beiden parallelen Wellen auf. Es ist eine Doppelkupplung vorgesehen, die ein vom Elektromotor eingeleitetes Drehmoment optional auf das jeweilige Antriebsrad eines der beiden Radsätze übertragen kann.

Aus der WO 2012/087700 A1 ist ein Elektroantriebsmodul mit einem Elektromotor, einem Planetengetriebe, einer Synchronisiereinheit, einem Untersetzungsgetriebe und einer Differentialanordnung bekannt. Das Sonnenrad des Planetengetriebes und ein Eingangsrad der Synchronisiereinheit sind über eine Hohlwelle miteinander verbunden. Die Hohlwelle weist radiale Bohrungen auf.

Elektroantriebe der genannten Art mit Mehrganggetriebe mit Kupplungsschaltung benötigen einen erheblichen baulichen Aufwand für die Kupplungen und die Aktuatorik. Mehrganggetriebe mit Synchronisiereinheit erfordern hohe Schaltkräfte, was hohe Anforderungen an den Aktuator stellt.

Der vorliegenden Erfindung liegt die Aufgabe zugrunde, eine Antriebsanordnung mit Schaltgetriebe und Differentialgetriebe für ein Kraftfahrzeug vorzuschlagen, die kompakt baut, ein schnelles Schalten ermöglicht und eine lange Lebensdauer aufweist.

Eine Lösung besteht in einer Antriebsanordnung für ein Kraftfahrzeug mit den Merkmalen nach Anspruch 1. Die Antriebsanordnung umfasst ein Schaltgetriebe und ein Differentialgetriebe, wobei das Schaltgetriebe eine drehend antreibbare Antriebswelle und eine zur Antriebswelle parallele Zwischenwelle, und mindestens eine erste Schaltstufe mit einem ersten Rädersatz sowie eine zweite Schaltstufe mit einem zweiten Rädersatz zur Übertragung von Drehmoment von der Antriebswelle auf die Zwischenwelle mit unterschiedlichen Übersetzungsverhältnissen aufweist, wobei die Zwischenwelle ein Abtriebsrad zur Übertragung von Drehmoment auf einen Differentialträger des Differentialgetriebes aufweist, wobei eine Drehachse des Differentialträgers parallel zur Zwischenwelle verläuft, und wobei das Abtriebsrad axial zwischen den mindestens zwei Schaltstufen angeordnet ist. Es ist insbesondere vorgesehen, dass die erste Schaltstufe ein auf der Antriebswelle drehbar gelagertes erstes Antriebsrad und ein mit der Zwischenwelle drehfest verbundenes erstes Zwischenrad aufweist und, dass die zweite Schaltstufe ein auf der Antriebswelle drehbar gelagertes zweites Antriebsrad und ein mit der Zwischenwelle drehfest verbundenes zweites Zwischenrad aufweist. Das erste Antriebsrad und das erste Zwischenrad können auch als erstes Räderpaar und das zweite Antriebsrad und das zweite Zwischenrad auch als zweites Räderpaar bezeichnet werden. Die Antriebsanordnung weist eine Schalteinheit auf, die vorzugsweise koaxial zur Antriebswelle und axial zwischen den mindestens zwei Schaltstufen angeordnet ist und ausgestaltet ist, um wahlweise Drehmoment über die erste Schaltstufe oder die zweite Schaltstufe zu übertragen. Die Schalteinheit kann ein Eingangsteil aufweisen, das mit der Antriebswelle drehfest verbunden ist, ein erstes Ausgangsteil, das mit dem ersten Antriebsrad drehfest verbunden ist, ein zweites Ausgangsteil, das mit dem zweiten Antriebsrad drehfest verbunden ist, und ein Koppelelement, mit dem das Eingangsteil optional mit dem ersten Ausgangsteil oder dem zweiten Ausgangsteil zur Übertragung eines Drehmoments koppelbar ist. Die Antriebswelle kann eine Längsbohrung sowie zumindest eine Querbohrung zur Schmiermittelversorgung von zumindest einem Sitzabschnitt für eines von dem ersten Antriebsrad, dem zweiten Antriebrad und dem Eingangsteil aufweisen. Es können also zumindest eine Querbohrung für einen Sitzabschnitt des ersten Antriebsrads und/oder zumindest eine Querbohrung für einen Sitzabschnitt des zweiten Antriebsrads und/oder zumindest eine Querbohrung für einen Sitzabschnitt des Eingangsteils vorgesehen sein. Gemäß der vorliegenden Offenbarung kann ein Sitzabschnitt ein Abschnitt oder Bereich sein, wo ein Element auf der Antriebswelle sitzt, respektive radial abgestützt ist. Dies schließt die Möglichkeiten mit ein, dass das Element auf dem zugehörigen Sitzabschnitt drehbar gelagert ist, wie beim ersten und zweiten Antriebsrad der Fall, oder, dass das Element auf dem zugehörigen Sitzabschnitt drehfest abgestützt ist, wie beim Eingangsteil der Fall. Ein Sitzabschnitt kann auch als Stützabschnitt bezeichnet werden.

Die Antriebsanordnung ist in vorteilhafter Weise besonders kompakt aufgebaut. Durch die genannte Konstruktion kann der zwischen den Schaltstufen zur Verfügung stehende Bauraum sehr gut ausgenutzt werden. Die Antriebswelle, die Zwischenwelle und die Drehachse des Differentials sind im Wesentlichen parallel zueinander angeordnet, wobei der radiale Abstand der genannten Bauteile verhältnismäßig gering ist. Insgesamt hat die Getriebeeinheit aus Schaltgetriebe und Differentialgetriebe hat eine besonders geringe Breite und Länge und damit ein auch ein geringes Gewicht. Gleichzeitig werden die auf der schnell drehenden Antriebswelle montierten beziehungsweise gelagerten Bauteile aufgrund der Bohrungen gut mit Schmiermittel versorgt, so dass Wärme trotz der kompakten Bauweise gut abgeführt werden kann und die Getriebeanordnung insgesamt eine lange Lebensdauer aufweist.

Die Antriebsanordnung weist vorzugsweise einen Elektromotor zum Antreiben der Antriebswelle auf. Die aus Elektromotor, Schaltgetriebe und Differentialgetriebe gebildete Baueinheit kann auch als Elektroantrieb bezeichnet werden. Der Elektroantrieb kann als alleiniger Antrieb für ein Kraftfahrzeug oder als zusätzliche Antriebsquelle in einem Kraftfahrzeug, das einen Verbrennungsmotor als Hauptantriebsquelle aufweist, verwendet werden. Der Elektroantrieb kann zum Antreiben einer beliebigen Antriebsachse eingesetzt werden, Vorderachse oder Hinterachse.

Vom Elektroantrieb eingeleitetes Drehmoment wird auf die Antriebswelle übertragen, von dieser über eine der mindestens zwei Schaltstufen auf die Zwischenwelle und von der Zwischenwelle wiederum auf den Differentialträger des Differentialgetriebes. Die Antriebswelle ist vorzugsweise koaxial zur Motorwelle des Elektromotors angeordnet, wobei sie je nach technischen Anforderungen auch parallel zu dieser angeordnet sein kann. Das Übersetzungsverhältnis zwischen Motorwelle und Antriebswelle ist insbesondere eins, das heißt die Antriebswelle dreht mit derselben Drehzahl wie die Motorwelle, wobei grundsätzlich auch andere Übersetzungen denkbar sind.

Jede der mindestens zwei Schaltstufen weist ein auf der Antriebswelle drehbar gelagertes Antriebsrad und ein drehfest mit der Zwischenwelle verbundenes Zwischenrad auf, die zumindest mittelbar miteinander in Eingriff sind. Ein erster Rädersatz mit einem ersten Antriebsrad und einem ersten Zwischenrad hat ein erstes Übersetzungsverhältnis i1. Ein zweiter Rädersatz mit einem zweiten Antriebsrad und einem zweiten Zwischenrad hat ein zweites Übersetzungsverhältnis i2, das vom ersten Übersetzungsverhältnis abweicht. Vorzugsweise ist das erste Übersetzungsverhältnis, das insbesondere zwischen 3,0 und 4,0 liegt, größer als das zweite Übersetzungsverhältnis, das insbesondere zwischen 1,3 und 2,3 liegt. Im ersten Gang dreht die Zwischenwelle folglich langsamer als im zweiten Gang. Vorstehend sind nur zwei Schaltstufen erwähnt; es versteht sich jedoch, dass das Schaltgetriebe je nach technischen Anforderungen an den Elektroantrieb auch mehr als zwei Schaltstufen aufweisen kann.

Eine besondere technische Herausforderung stellt die Anordnung von Gangrädern auf der Antriebswelle dar, da diese, insbesondere wenn die Welle direkt vom Elektromotor angetrieben wird, mit sehr hohen Drehzahlen von über 10.000 Umdrehungen pro Minute rotiert. Um eine gute Schmiermittelversorgung und lange Lebensdauer der drehenden Bauteile zu erreichen, hat die Antriebswelle vorzugsweise eine Längsbohrung sowie zumindest eine Querbohrung. Auf diese Weise kann Schmiermittel vom Inneren der Antriebswelle zum jeweiligen Sitzabschnitt des Eingangsteils, ersten Ausgangsteil und/oder zweiten Ausgangsteils gelangen. Das Eingangsteil ist mit Übermaßpassung, auch als Presspassung bezeichnet, mit der Antriebswelle drehfest verbunden, wobei zumindest eine der Querbohrungen mit dem Sitzabschnitt des Eingangsteils fluidisch verbunden ist. Auf diese Weise wird die Bildung von Passungsrost im Kontaktbereich zwischen Antriebswelle und Eingangsteil verhindert.

Das Eingangsteil ist mit Übermaßpassung mit der Antriebswelle drehfest verbunden, wobei von der zumindest einen Querbohrungen zumindest eine zentrale Querbohrung mit dem Sitzabschnitt des Eingangsteils fluidisch verbunden ist. In Ergänzung kann von der zumindest einen Querbohrungen zumindest eine erste Querbohrung mit dem Sitzabschnitt des ersten Antriebsrads fluidisch verbunden sein und/oder zumindest eine zweite Querbohrung mit dem Sitzabschnitt des zweiten Antriebsrads fluidisch verbunden sein. Das erste Antriebsrad ist mittels eines ersten Lagers auf der Antriebswelle drehbar gelagert, wobei das erste Antriebsrad einen ersten Hülsenansatz aufweisen kann, der sich axial in Richtung zum Eingangsteil erstreckt und zumindest mittelbar gegen dieses axial abgestützt ist. Seitlich benachbart zum ersten Lager kann radial zwischen dem ersten Hülsenansatz und der Antriebswelle ein erster Ringspalt vorgesehen sein kann, durch den Schmiermittel vom Sitzabschnitt des ersten Antriebsrads zur Schalteinheit fließen kann. Dasselbe kann alternativ oder in Ergänzung entsprechend auch für das zweite Antriebsrad gelten, das heißt dass hier ein zweiter Ringspalt vorgesehen sein kann, durch den Schmiermittel vom Sitzabschnitt des zweiten Antriebsrads zur Schalteinheit fließen kann.

Nach einer möglichen Ausführungsform kann das erste Antriebsrad in Richtung zum Eingangsteil gegen eine erste innere Scheibe und in Richtung vom Eingangsteil weg gegen eine erste äußere Scheibe axial abgestützt sein. Entsprechend kann das zweite Antriebsrad in Richtung zum Eingangsteil gegen eine zweite innere Scheibe und in Richtung vom Eingangsteil weg gegen eine zweite äußere Scheibe axial abgestützt sein. Die Angabe innere beziehungsweise äußere Scheibe bezieht sich dabei jeweils auf eine mittlere Ebene der Schalteinheit. Die Scheiben sind in Form von Gleitscheiben aus einem reibungsarmen Werkstoff gestaltet, so dass ein reibungsarmer Gleitkontakt mit dem relativ hierzu drehenden jeweiligen Antriebsrad ermöglicht wird.

Die erste innere Scheibe und/oder die zweite innere Scheibe können jeweils zumindest eine Nut aufweisen, durch die Schmiermittel vom ersten beziehungsweise zweiten Ringspalt zur Schalteinheit fließen kann. Die erste äußere Scheibe und/oder die zweite äußere Scheibe können jeweils eine durchgehend Anlagefläche aufweisen, gegen die das jeweilige Antriebsrad axial abgestützt ist, das heißt, die erste äußere Scheibe und/oder die zweite äußere Scheibe können insbesondere nutlos gestaltet sein. Durch diese Ausgestaltung mit Schmiermittelnuten in den inneren Scheiben und nutlosen äußeren Scheiben gelangt das durch die Querbohrungen der Antriebswelle zu den Lagersitzen der Antriebsräder fließende Schmiermittel gezielt in Richtung Schalteinheit, um diese zu schmieren und zu kühlen.

An einem Ende der Antriebswelle ist eine Zulaufanordnung zum Zuführen von Schmiermittel in die Längsbohrung vorgesehen, die ein Zuführelement mit einem rohrförmigen Kanal aufweist, der sich in die Längsbohrung hineinerstreckt, sowie einen in die Längsbohrung eingesetzten Ring. Der Ring ist in dem Ringraum, der zwischen dem rohrförmigen Kanal und der Bohrungswandung der Antriebswelle gebildet ist, vorgesehen. Der Ring, welcher beispielsweise in die Längsbohrung eingepresst werden kann, verhindert ein Rückfließen von in der Längsbohrung befindlichem Schmiermittel. So gelangt das Schmiermittel gezielt zu den Querbohrungen und von dort zu den Lagersitzen der Antriebsräder beziehungsweise zur Sitzfläche des Eingangsteils.

Das Schaltgetriebe, das auch als Wechselgetriebe bezeichnet wird, weist vorzugsweise eine Schalteinheit zum Schalten der mindestens zwei Schaltstufen auf. Die Schalteinheit ist insbesondere koaxial zur Antriebswelle angeordnet, was zu einem kompakten Aufbau der Getriebeeinheit beiträgt. Nach einer bevorzugten Ausführungsform ist die Schalteinheit axial zwischen dem ersten Antriebsrad und dem zweiten Antriebsrad angeordnet. Dabei kann die Schalteinheit das erste Zwischenrad und/oder das zweite Zwischenrad radial teilweise überdecken, was zu einer guten Bauraumausnutzung führt. Für eine kompakte Baugröße ist es günstig, wenn die Schalteinheit zumindest teilweise eine axiale Überdeckung mit dem Zwischenwellen-Abtriebsrad hat. Alternativ oder in Ergänzung hat die Schalteinheit zumindest teilweise eine axiale Überdeckung mit der Differentialmittelebene des Differentialgetriebes. Als Differentialmittelebene ist eine Ebene definiert, die senkrecht zur Differentialachse verläuft und eine Differentialradachse beinhaltet. Insgesamt eine organische Struktur erreicht, bei der die Schalteinheit, das Zwischenwellen-Abtriebsrad und das Ringrad des Differentials mittig, beziehungsweise im Wesentlichen in einer Ebene, angeordnet sind und seitlich von den Rädern der ersten und zweiten Schaltstufe flankiert werden.

Nach einer bevorzugten Ausgestaltung weist die Schalteinheit folgendes auf: ein Eingangsteil, das mit der Antriebswelle drehfest verbunden ist, ein erstes Ausgangsteil, das mit dem ersten Antriebsrad drehfest verbunden ist, ein zweites Ausgangsteil, das mit dem zweiten Antriebsrad drehfest verbunden ist, und ein Koppelelement, welches das Eingangsteil optional mit dem ersten Ausgangsteil oder dem zweiten Ausgangsteil zur Übertragung eines Drehmoments verbinden kann. Das Koppelelement ist vorzugsweise in Form einer Schiebemuffe gestaltet, die auf dem Eingangsteil drehfest gehalten und gegenüber diesem mittels eines Aktuators axial verschiebbar ist. Die Schiebemuffe ist in einer Neutralposition mit keinem von dem ersten und zweiten Ausgangsteil verbunden, so dass der Elektromotor und das Differential voneinander entkoppelt sind. In einer ersten Schaltposition ist die Schiebemuffe mit dem ersten Ausgangsteil verbunden, so dass Drehmoment vom Elektromotor auf das Differential mit einem ersten Übersetzungsverhältnis übertragen wird. In einer zweiten Schaltposition ist die Schiebemuffe mit dem zweiten Ausgangsteil drehfest verbunden ist, so dass Drehmoment über die zweite Schaltstufe auf das Differential übertragen wird. Es versteht sich, dass auch andere Arten von schaltbaren Kupplungen zur selektiven Drehmomentübertragung zwischen Eingangsteil und einem der Ausgangsteile einsetzbar sind, beispielsweise eine Klauen- oder Zahnkupplung.

Der Aktuator umfasst vorzugsweise einen Spindeltrieb mit einer drehend antreibbaren Spindel und einer Spindelhülse, die mit einem Innengewinde in ein entsprechendes Außengewinde der Spindel eingreift, so dass die Spindelhülse bei Drehung der Spindel axial bewegt wird, wobei an der Spindelhülse eine Schaltgabel befestigt ist, die in eine Ringnut der Schiebemuffe eingreift. Der Antrieb der Spindel erfolgt vorzugsweise mittels eines Elektromotors, der von einer elektronischen Regeleinheit ansteuerbar ist. Es versteht sich, dass auch andere Antriebe verwendbar sind, beispielsweise ein hydraulischer Antrieb. Ebenso können anstelle des Spindeltriebs auch andere bekannte Aktuatoren verwendet werden, um die Schiebemuffe axial zu bewegen.

Nach einer bevorzugten Ausgestaltung ist ein Sensor vorgesehen, der ein die axiale Position der Schiebemuffe, respektive der Spindelhülse, repräsentierendes Signal erfassen kann. Das Signal wird an die Regeleinheit zur Steuerung des Aktuators weitergegeben.

Für eine besonders genaue Steuerung und damit ein sicheres Einlegen der Gänge, ist die Verwendung von weiteren Erfassungsmitteln günstig, welche ein die Kraft zum axialen Bewegen der Schiebemuffe, respektive der Spindelhülse, repräsentierendes Signal erfassen können. Dieses Signal wird an die Regeleinheit weitergegeben und zur Steuerung des Aktuators verwendet.

Nach einer bevorzugten Ausgestaltung umfasst die Schalteinheit je Ausgangsteil einen Synchronisiermechanismus. Mit dem Synchronisiermechanismus erfolgt vor dem Schalten ein Angleichen der Drehzahlen zwischen dem Eingangsteil und dem jeweiligen Ausgangsteil. Das Eingangsteil und die Ausgangsteile sind vorzugsweise als Zahnräder gestaltet und können insofern auch als Eingangsrad und Ausgangsräder bezeichnet werden.

Das Abtriebsrad der Zwischenwelle, und damit auch das Ringrad des Differentialträgers, sind axial zwischen dem ersten Zwischenrad und dem zweiten Zwischenrad angeordnet. Dabei hat das Abtriebsrad der Zwischenwelle zumindest teilweise eine axiale Überdeckung mit der Differentialmittelebene. Hierdurch wird insgesamt ein im Wesentlichen symmetrischer Aufbau der Getriebeeinheit in Bezug auf die Differentialmittelebene erreicht. Das Abtriebsrad ist fest mit der Zwischenwelle verbunden und vorzugsweise einteilig mit dieser gestaltet. Axial benachbart zum Abtriebsrad sind die Sitzflächen für die beiden Zwischenräder, die drehfest mit der Zwischenwelle verbunden sind. Dabei stützt sich das erste Zwischenrad gegen eine erste Seitenfläche und das zweite Zwischenrad gegen eine entgegengesetzt gerichtete zweite Seitenfläche des Abtriebsrads axial ab. Es ist vorgesehen, dass das Abtriebsrad jeweils einen kleineren Durchmesser und eine größere Breite aufweist, als das erste Zwischenrad und zweite Zwischenrad.

Bevorzugte Ausführungsbeispiele werden nachstehend anhand der Zeichnungsfiguren erläutert. Hierin zeigt:
- Figur 1: eine erfindungsgemäße Antriebsanordnung in einer Schnittdarstellung;
- Figur 2: ein Detail der Antriebsanordnung aus Figur 1;
- Figur 3: die Zulaufanordnung aus Figur 1 und Figur 2 im Detail;
- Figur 4: die Baueinheit aus Antriebswelle mit darauf montierten Elementen aus Figur 1 als Detail.
- Figur 5: ein Detail der Baueinheit aus Figur 4;
- Figur 6: schematisch eine erfindungsgemäße Antriebsanordnung mit Elektromotor;
- Figur 7: die Antriebsanordnung aus Figur 6 in Neutralstellung (N);
- Figur 8: die Antriebsanordnung aus Figur 7 in einer ersten Schaltstellung (P1); und
- Figur 9: die Antriebsanordnung aus Figur 8 in einer zweiten Schaltstellung (P2).

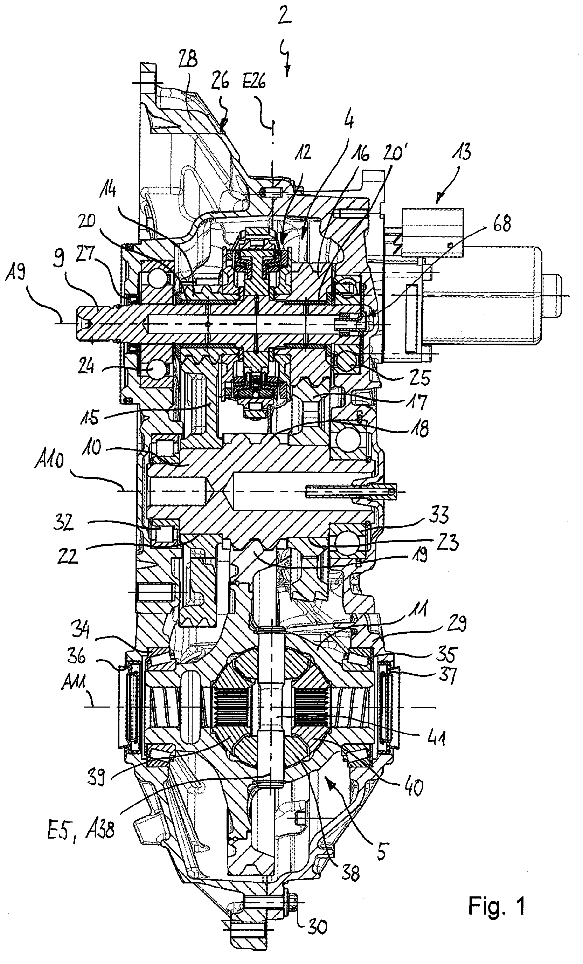

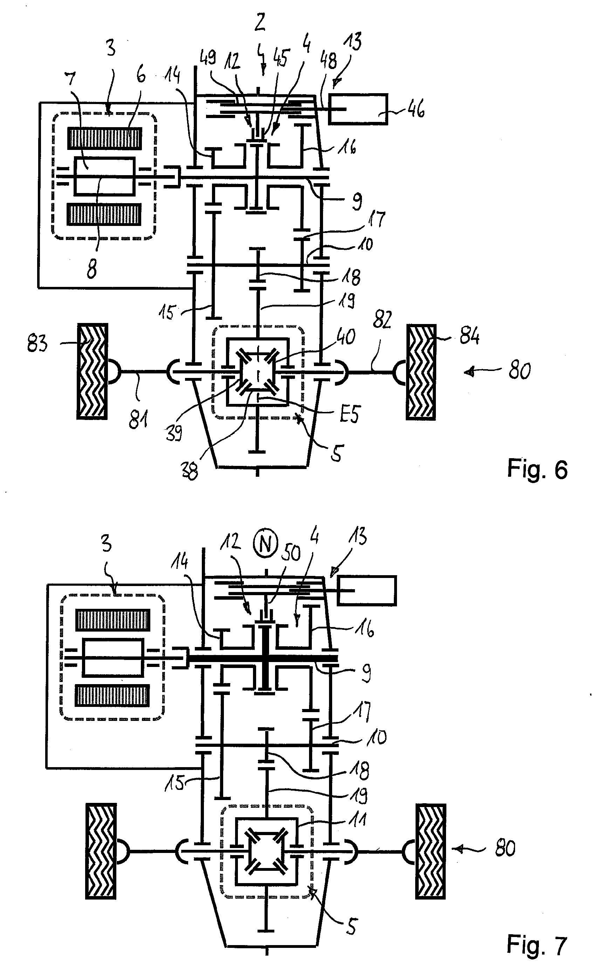

Die Figuren 1 bis 9 werden im Folgenden gemeinsam beschrieben. Figur 1 zeigt eine erfindungsgemäße Antriebsanordnung 2 mit einem Schaltgetriebe 4 und einem Differentialgetriebe 5. Zum Antrieb der aus Schaltgetriebe 4 und Differentialgetriebe 5 gezeigten Baueinheit, die auch als Getriebeeinheit bezeichnet werden kann, wird ein Elektromotor 3 verwendet, der in Figur 6 gezeigt ist. Elektromotor 3, Schaltgetriebe 4 und Differentialgetriebe 5 bilden gemeinsam einen Elektroantrieb zum Antreiben einer Antriebsachse eines Kraftfahrzeugs. Dabei kann der Elektroantrieb als alleinige Antriebsquelle oder mit einer zusätzlichen Antriebsquelle verwendet werden.

Der Elektromotor 3 umfasst einen Stator 6 und einen hierzu drehbaren Rotor 7, der bei Bestromen des Elektromotors eine Motorwelle 8 drehend antreibt. Die Drehbewegung der Motorwelle 8 wird auf die Antriebswelle 9 des Schaltgetriebes 4 übertragen. Der Elektromotor 3 wird von einer Batterie mit elektrischem Strom versorgt, wobei die Batterie im Generatorbetrieb auch vom Elektromotor aufgeladen werden kann.

Das Schaltgetriebe 4 umfasst zwei Schaltstufen, so dass eingeleitetes Drehmoment von der Antriebswelle 9 auf die Zwischenwelle 10 mit zwei unterschiedlichen Übersetzungsverhältnissen i1, i2 übertragen werden kann. Die Zwischenwelle 10 ist mit dem Differentialträger 11 des Differentialgetriebes 5 antriebsverbunden. Mittels des Differentialgetriebes 5 wird das eingeleitete Drehmoment auf zwei Seitenwellen 81, 82 aufgeteilt, über die das Drehmoment auf die Fahrzeugräder 83, 84 übertragen wird. Es ist eine Schalteinheit 12 vorgesehen, die von einem Aktuator 13 betätigbar ist, um das Schaltgetriebe 4 wahlweise in Neutralstellung, den ersten Gang oder den zweiten Gang zu schalten. Auf den Aufbau und die Funktionsweise der Schalteinheit 12 wird weiter unten noch näher eingegangen.

Das Schaltgetriebe 4 ist als Untersetzungsgetriebe gestaltet, so dass eine vom Elektromotor 3 eingeleitete Drehbewegung vom Schnellen ins Langsame übersetzt wird. Die erste Übersetzungsstufe umfasst ein auf der Antriebswelle 9 drehbar gelagertes Antriebsrad 14 und ein drehfest mit der Zwischenwelle 10 verbundenes Zwischenrad 15, die miteinander in Verzahnungseingriff sind. Erstes Antriebsrad 14 und erstes Zwischenrad 15 bilden einen ersten Rädersatz mit einem ersten Übersetzungsverhältnis i1, das vorzugsweise zwischen 3,0 und 4,0 liegt. Die zweite Übersetzungsstufe umfasst ein auf der Antriebswelle 9 drehbar gelagertes zweites Antriebsrad 16 und ein drehfest mit der Zwischenwelle 10 verbundenes zweites Zwischenrad 17, die miteinander in Verzahnungseingriff sind. Zweites Antriebsrad 16 und zweites Zwischenrad 17 bilden einen zweiten Rädersatz mit einem zweiten Übersetzungsverhältnis i2, das vorzugsweise zwischen 1,3 und 2,3 liegt. Eine dritte Übersetzungsstufe umfasst das mit der Zwischenwelle 10 drehfest verbundene Abtriebsrad 18 und das fest mit dem Differentialträger 11 verbundene Ringrad 19. Das Abtriebrad 18 der Zwischenwelle 11 und das Ringrad 19 bilden dabei einen dritten Rädersatz mit einem dritten Übersetzungsverhältnis i3, das vorzugsweise zwischen 2,4 und 3,4 liegt. Auf die Übersetzung der Drehbewegung zwischen Antriebswelle 9 und Differentialträger 11 wird weiter unten im Zusammenhang mit der Beschreibung der Figuren 6 bis 9 noch näher eingegangen.

Es ist erkennbar, dass das Abtriebsrad 18 der Zwischenwelle 10 axial zwischen dem ersten und zweiten Zwischenrad 15, 17 angeordnet sind. Das Abtriebsrad 18 ist einteilig mit der Zwischenwelle gestaltet und bildet zwei seitliche Stützflächen, gegen welche die beiden Zwischenräder 15, 17 axial abgestützt sind. Die Antriebsräder 14, 16 sind über jeweilige Lagermittel 20, 20' auf der Antriebswelle 9 drehbar gelagert. Die Zwischenräder 15, 17 sind über Wellenverbindungen 22, 23 mit der Zwischenwelle 10 drehfest verbunden, insbesondere mittels einer Press- und/oder Schweißverbindung.

Die Antriebswelle 9 ist mittels erster Lager 24, 25 in einem Gehäuse 26 der Antriebsanordnung 2 um eine erste Drehachse A9 drehbar gelagert. Der an der Eingangsseite der Antriebswelle 9 zwischen Welle und Gehäuse 26 gebildete Ringraum ist mittels eines Radialwellendichtrings 27 abgedichtet. Das Gehäuse 26 hat ein erstes Gehäuseteil 28 und ein zweites Gehäuseteil 29, die in einer Fügeebene E26 mittels geeigneter Verbindungsmittel 30 wie Schraubverbindungen miteinander verbunden sind.

Die Zwischenwelle 10 ist mittels zweiter Lager 32, 33 im Gehäuse 26 um eine zweite Drehachse A10 drehbar gelagert. Die Lager 32, 33 sind als Wälzlager gestaltet, die an Enden der Zwischenwelle 10 vorgesehen sind.

Das Abtriebsrad 18 der Zwischenwelle 10 kämmt mit dem Ringrad 19 des Differentialträgers 11, um Drehmoment in das Differential einzuleiten. Der Differentialträger 11, der auch als Differentialkorb bezeichnet wird, ist in dem Gehäuse 26 mittels Lager 34, 35 um die Drehachse A11 drehbar gelagert und mittels Radialwellendichtringen 36, 37 abgedichtet. Das Differential 5 umfasst ferner mehrere Differentialräder 38, die in dem Differentialträger 11 auf einer zur Drehachse A11 senkrechten Achse A38 drehbar gelagert sind, sowie zwei Seitenwellenräder 39, 40, die jeweils koaxial zur Drehachse A11 drehbar angeordnet und mit den Differentialrädern 38 in Verzahnungseingriff sind. Zwei einander gegenüberliegende Differentialräder 38 sind auf einem Bolzen 41 drehbar gelagert, der in Bohrungen des Differentialträgers 11 eingesteckt und axial fixiert ist. Die Achse A38 der Differentialräder 38 definiert eine Differentialmittelebene E5. Vom Ringrad 19 in den Differentialträger 11 eingeleitetes Drehmoment wird über die Differentialräder 38 auf die beiden Seitenwellenräder 39, 40 übertragen, zwischen denen eine ausgleichende Wirkung besteht. Die Seitenwellenräder 39, 40 sind zur Übertragung eines Drehmoments mit den zugehörigen Seitenwellen 81, 82 verbunden, die das eingeleitete Drehmoment auf die Räder 83, 84 des Kraftfahrzeugs übertragen, wie in Figuren 6 bis 9 gezeigt. Die beiden Seitenwellenräder 39, 40 haben jeweils eine Innenverzahnung, in die eine zugehörige Seitenwelle zur Übertragung eines Drehmoments mit einer entsprechenden Außenverzahnung drehfest eingreifen kann.

Es ist erkennbar, dass die Antriebswelle 9, die Zwischenwelle 10 und eine Drehachse A11 des Differentialträgers 11 parallel zueinander verlaufen. Das Abriebsrad 18 der Zwischenwelle 10 hat zumindest teilweise eine axiale Überdeckung mit der Differentialmittelebene E5. Ferner liegt die Fügeebene E26 des Gehäuses 26 in axialer Überdeckung mit dem Zwischenwellen-Abtriebsrad 18, respektive der Schalteinheit 12. Insgesamt wird durch die erfindungsgemäße Konstruktion ein im Wesentlichen symmetrischer Aufbau der Getriebeeinheit in Bezug auf die Differentialmittelebene, respektive der Fügeebene, erreicht. Dies führt zu einem kompakten Aufbau und einer einfachen Montierbarkeit der Anordnung.

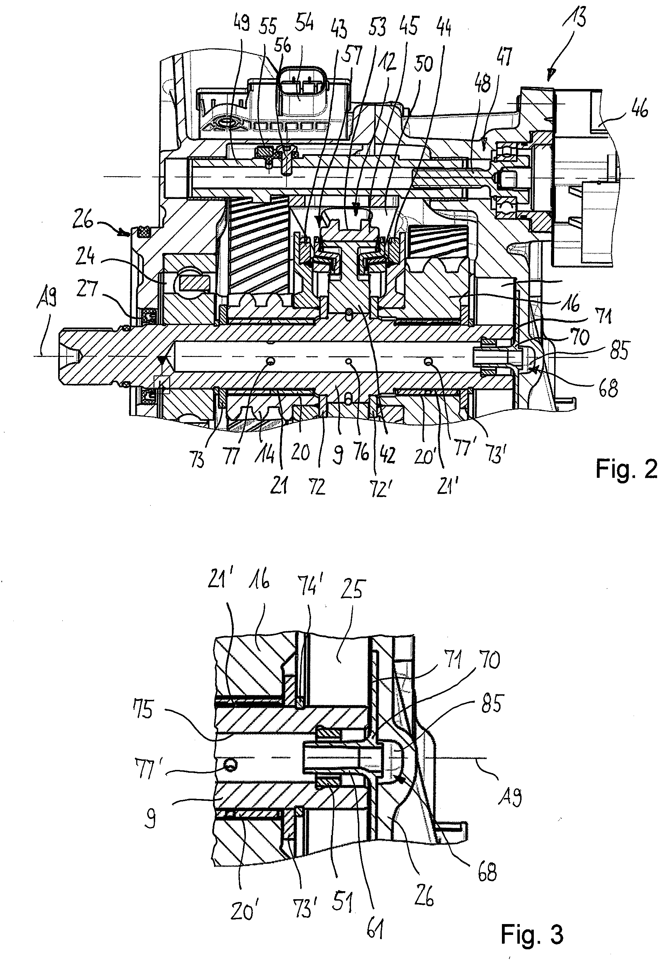

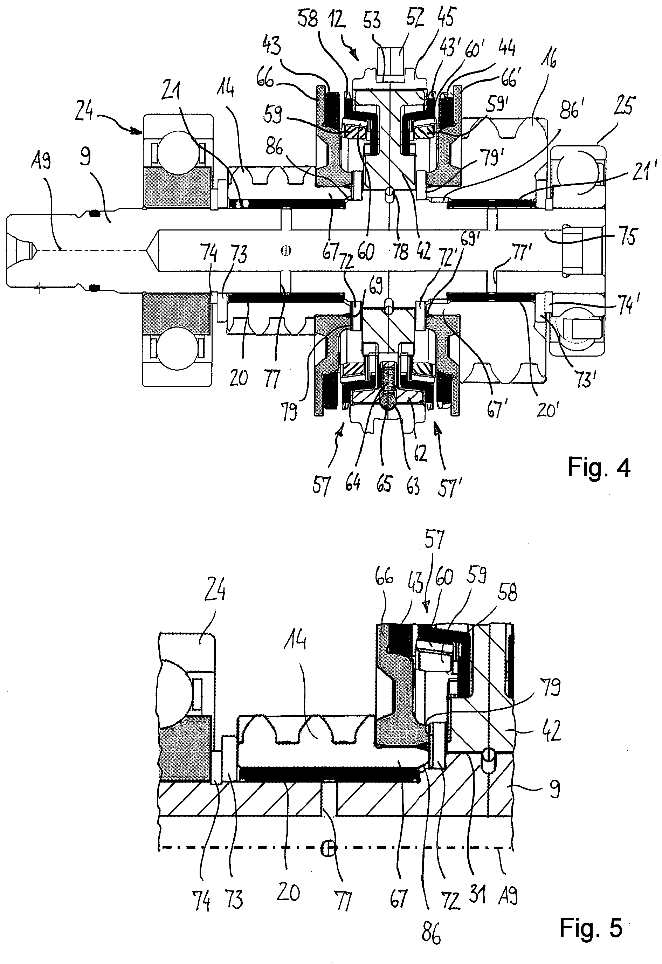

Die Schalteinheit 12, welche im Detail in den Figuren 2 und 4 dargestellt ist, ist axial zwischen dem ersten Antriebsrad 14 und dem zweiten Antriebsrad 16 angeordnet. Die Schalteinheit umfasst ein Eingangsteil 42 auf, das mit der Antriebswelle 9 drehfest verbunden und axial fixiert ist, ein erstes Ausgangsteil 43, das mit dem ersten Antriebsrad 14 fest verbunden ist, und ein zweites Ausgangsteil 44, das mit dem zweiten Antriebsrad 16 fest verbunden ist. Das Eingangsteil 42 ist mit Presspassung mit der Antriebswelle 9 drehfest verbunden. Zur Axialsicherung ist ein Sicherungsring 78 vorgesehen, der in entsprechenden Ringnuten der Antriebswelle bzw. des Eingangsteils eingreift. Es ist ein Koppelelement 45 vorgesehen, welches das Eingangsteil 42 optional mit dem ersten Ausgangsteil 43 oder dem zweiten Ausgangsteil 44 zur Übertragung eines Drehmoments verbinden kann. Hierfür ist das Koppelelement 45 in Form einer Schiebemuffe gestaltet, die auf dem Eingangsteil 44 drehfest und axial verschiebbar gehalten ist.

Die Betätigung der Schiebemuffe erfolgt über den Aktuator 13, der einen elektromotorischen Drehantrieb 46 und eine Wandlereinheit 47 umfasst, welche eine Drehbewegung in eine Linearbewegung umwandelt. Die Wandlereinheit 47 weist einen Spindeltrieb auf mit einer drehend antreibbaren Spindel 48 und einer Spindelhülse 49, die bei Drehung der Spindel axial bewegt wird. An der Spindelhülse 49 ist eine Schaltgabel 50 befestigt, die mit zwei Gleitsteinen 52 in eine Ringnut 53 der Schiebemuffe 45 eingreift. Der Aktuator 13 ist von einer elektronischen Regeleinheit (nicht dargestellt) ansteuerbar und kann von dieser bedarfsweise, in Abhängigkeit vom Fahrzustand des Kraftfahrzeugs angesteuert werden. Hierfür ist insbesondere vorgesehen, dass die elektronische Regeleinheit eine die Drehzahl der Antriebswelle 9 repräsentierende Größe und eine die Drehzahl der Zwischenwelle 10 repräsentierende Größe als Eingangsgrößen erhält. Dies können beispielsweise die Motordrehzahl des Elektromotors 3 und die Raddrehzahl der Fahrzeugräder 83, 84 sein, aus denen sich die Drehzahlen der Antriebswelle 9 und der Zwischenwelle 10 ermitteln lassen.

Für eine genaue Ansteuerung beziehungsweise Positionierung der Schaltmuffe 45 ist ein Sensor 54 vorgesehen, der ein die axiale Position der Schaltgabel 50 beziehungsweise der Schaltmuffe 45 repräsentierendes Signal erfassen und an die Steuereinheit weitergeben kann. Der Sensor ist als Wegsensor gestaltet, insbesondere als ein berührungsloser Sensor wie ein Magnetfeldsensor, oder ein induktiver Sensor. Die Verwendung eines berührungslosen Sensors hat den Vorteil geringer Leistungsverluste und eines geringen Verschleißes. Der berührungslose Sensor wirkt mit einem Signalgeber 55 zusammen. Dabei erfasst der Sensor 54 die axiale Position des Signalgebers 55 und gibt ein entsprechendes Sensorsignal an die elektronische Regeleinheit weiter. Der Signalgeber 55 ist mit der Spindelhülse 49 verbunden, so dass er bei Betätigung des Aktuators 13 gemeinsam mit dieser axial bewegt wird.

Der Signalgeber 55 ist in einem Trägerelement aufgenommen, das mit der Spindelhülse mittels einer Schraubverbindung 56 befestigt ist. Für eine besonders genaue Steuerung können zusätzlich zum genannten Wegsensor 54 weitere Erfassungsmittel vorgesehen sein. Diese Mittel erfassen insbesondere ein die Kraft zum axialen Bewegen der Schiebemuffe 45, respektive der Spindelhülse 49, repräsentierendes Signal, weswegen sie auch als Kraftsensor bezeichnet werden können. Beispielsweise kann ein Stromsignal zur Ansteuerung des Aktuators erfasst werden, welches repräsentativ ist für die aufzuwendende Kraft, um die Spindel anzutreiben.

Die Schalteinheit 12 umfasst ferner je Ausgangsteil 43, 44 einen Synchronisiermechanismus 57, 57' mit dem vor dem Schalten eine Drehzahlangleichung der miteinander zu verbindenden Bauteile vorgenommen wird, das heißt zwischen dem Eingangsteil 42 und dem jeweiligen Ausgangsteil 43, 44. Da die Synchronisiermechanismen 57, 57' gleich aufgebaut sind, wird stellvertretend nur einer beschrieben. Der Synchronisiermechanismus 57 weist einen Außenring 58 mit einem Innenkonus, einen Innenring 59 mit einem Außenkonus und einen dazwischen angeordneten Zwischenring 60 auf. Der Außenring 58 ist mit dem Eingangsteil 42 derart drehfest verbunden, dass beide gemeinsam um die Drehachse A9 rotieren, wobei eine begrenzte Relativdrehung zwischen Eingangsteil 42 und Außenring 58 möglich ist. Der Zwischenring 60 ist mit dem Ausgangsteil 43 drehfest verbunden. Der Innenring 59 ist wieder mit dem Eingangsteil 42 drehfest verbunden. Durch diese Ausgestaltung wird sichergestellt, dass ein Ineingriffbringen der Schiebemuffe 45 und des jeweiligen Ausgangsteils 43, 44 erst möglich ist, wenn beide gemeinsam mit derselben Drehzahl rotieren, das heißt synchronisiert sind. Das Synchronisieren wird mittels mehrerer umfangsverteilter Druckstücke 62 erreicht, die mit dem Eingangsteil 42 derart drehfest verbunden sind, dass sie gemeinsam mit diesem rotieren. Durch axiales Bewegen der Schiebemuffe 45 werden die Druckstücke 62 gegen den Außenring 58 beaufschlagt, so dass an den Flächenpaarungen zwischen Außenring 58 und Zwischenring 60 einerseits, und Zwischenring 60 und Innenring 59 andererseits, Reibschluss entsteht. Dieser Reibschluss führt zu einer Drehzahlangleichung zwischen Eingangsteil 42 und jeweiligem Ausgangsteil 43, 44. Drehen die zu verbindenden Teile synchron, kann die Schiebemuffe 45 vollständig in die Eingriffsposition verschoben werden, so dass Eingangsteil 42 und das jeweilige Ausgangsteil 43, 44 zur Übertragung eines Drehmoments miteinander verbunden sind. Die Druckstücke 62 sind jeweils über eine Kugel 63, die von einer Feder 64 nach radial außen vorgespannt ist, mit der Schiebemuffe 45 verbunden. Dabei greift die Kugel 63 jeweils in eine innere Nut 65 der Schiebemuffe 45 formschlüssig ein. Übersteigt die axiale Betätigungskraft der Schiebemuffe 45 die Haltekraft der Kugel 63, wird diese entgegen der Vorspannkraft der Feder 64 nach radial innen bewegt, so dass die Schiebemuffe weiter in Richtung des jeweiligen Ausgangsteils 43, 44 bewegt werden kann.

Um eine gute Schmiermittelversorgung und lange Lebensdauer der drehenden Bauteile zu erreichen, hat die Antriebswelle 9 eine Längsbohrung 75 sowie je Sitzfläche für die hierauf angeordneten Räder 42, 14, 16 mehrere über den Umfang verteilte Querbohrungen 76, 77, 77'. Auf diese Weise kann Schmiermittel vom Inneren der Antriebswelle 9 zum Sitzabschnitt 31 des Eingangsteils 42 beziehungsweise zu den Sitzabschnitten 21, 21' des ersten und zweiten Antriebsrads 14, 16 gelangen, um diese zu schmieren. Die Sitzabschnitte 21, 21' des ersten und zweiten Antriebsrads 14, 16 sind mit der Schalteinheit 12 fluidisch verbunden ist, so dass Schmiermittel von dem jeweiligen Sitzabschnitt anschließend zur Schalteinheit 12 fließen kann, um diese zu schmieren.

Am Ende der Antriebswelle 9 ist eine Zulaufanordnung 68 zum Zuführen von Schmiermittel in die Längsbohrung 75 vorgesehen. Das Gehäuse 26 hat eine Fangrippe (nicht dargestellt), an der in dem Getriebe umschleudertes Schmiermittel aufgefangen und über einen Kanal in eine Kammer 85 fließen kann. Die Zulaufanordnung 68 weist einen Ring 51 auf, der in der Längsbohrung 75 einsitzt, sowie ein Zuführelement 70 mit einem rohrförmigen Kanal 61, der sich von der Kammer 85 durch den Ring 51 hindurch in die Längsbohrung 75 hineinerstreckt. So kann in der Kammer 85 befindliches Schmiermittel durch den Kanal 61 hindurch in die Längsbohrung 75 hineinfließen. Der Ring 51 ist in die Längsbohrung 75 mit Übermaß eingepresst und stützt sich axial gegen eine Schulter in der Antriebswelle 9 ab. Der Ring 51 hat einen kleineren Innendurchmesser als die Längsbohrung 75, so dass er eine Barriere für in die Längsbohrung gelangtes Schmiermittel bildet. Der Ring 51 verhindert ein Zurücklaufen von Schmiermittel aus der Bohrung, welches sich aufgrund der Zentrifugalkräfte als Film an der die Bohrung bildenden Innenwandung ringförmig verteilt. So gelangt das Schmiermittel gezielt zu den Querbohrungen 76, 77, 77' und von dort zu den Lagersitzen der Antriebsräder 14, 16 beziehungsweise zur Sitzfläche des Eingangsteils 42. Zwischen dem Röhrchen 61 und dem Ring 51 ist ein Ringspalt gebildet, durch den überschüssiges Schmiermittel aus der Längsbohrung 75 hinausfließen kann, welches durch Radialspalte 71 in einem Flanschabschnitt des Zuführelements 70 zum Lager 25 gelangen kann, um dieses zu schmieren.

Das erste Ausgangsteil 43 ist mit einem ersten Ring 66 fest verbunden, insbesondere verschweißt. Hierfür hat der erste Ring 66 eine ringförmige Ausnehmung, in der das Ausgangsteil 43 einsitzt. Radial innen hat der erste Ring 66 einen Nabenabschnitt, die auf einem Hülsenansatz 67 des ersten Antriebsrads 14 aufsitzt und mit diesem fest verbunden ist. Zur Befestigung ist eine Schweißverbindung 69 vorgesehen, die von der Stirnseite her in axialer Richtung ausgeführt ist. Erstes Ausgangsteil 43, erster Ring 66 und erstes Antriebsrad 14 bilden gemeinsam ein erstes Zahnrad. Das erste Zahnrad ist mittels eines Lagers 20 auf der Antriebswelle 9 drehbar gelagert. Das Lager 20 ist als Gleitlager ausgestaltet und umfasst zwei Lagerbuchsen, wobei auch andere geeignete Lagermittel denkbar wären. In axiale Richtung ist das erste Zahnrad zwischen einer ersten inneren Scheibe 72 und einer ersten äußeren Scheibe 73 fixiert, wobei sich die Angabe innere und äußere Scheibe auf eine mittlere Ebene der Schalteinheit bezieht. Die innere Scheibe 72 sitzt auf einer entsprechenden Sitzfläche der Antriebswelle 9, vorzugsweise mit Übermaßpassung, und ist gegen eine Schulter der Antriebswelle axial abgestützt. Die äußere Scheibe 73 ist über einen Sicherungsring 74 gegenüber der Antriebswelle 9 in entgegengesetzter axialer Richtung abgestützt. Die Scheiben 72, 73 sind in Form von Gleitscheiben aus einem reibungsarmen Werkstoff gestaltet. Es ist insbesondere in den Figuren 4 und 5 erkennbar, dass die erste innere Scheibe 72 mehrere über den Umfang verteilte Nuten 79 aufweist, durch die Schmiermittel vom Lager 20 durch einen zwischen Antriebsrad 14 und Antriebswelle 9 gebildeten Ringspalt 86 zum ersten Synchronisiermechanismus 57 der Schalteinheit 12 fließen kann. Die äußere Scheibe 73 weist demgegenüber eine durchgehende, nutlose Anlagefläche auf, gegen die das Antriebsrad 14 axial abgestützt ist. Durch diese Ausgestaltung mit Schmiermittelnuten 79 in der inneren Scheibe 72 und nutloser äußerer Scheibe 73 gelangt das durch die Querbohrungen 77 der Antriebswelle zum Lagersitz des Antriebsrads 14 fließende Schmiermittel gezielt in Richtung Schalteinheit, beziehungsweise Synchronisiermechanismus 57.

Das zweite Ausgangsteil 44, der zweite Ring 66' und das zweite Antriebsrad 16 bilden entsprechend ein zweites Zahnrad, welches analog zum ersten Zahnrad gestaltet ist. Insofern wird hinsichtlich aller Gemeinsamkeiten auf die Beschreibung zum ersten Zahnrad Bezug genommen, wobei einander entsprechende Einzelheiten mit denselben Bezugszeichen mit Indizes versehen sind. Funktionsweise und Aufbau der die Schmierung des zweiten Antriebsrads 16, beziehungsweise des zweiten Synchronisiermechanimus 57', betreffenden Einzelzeiten sind identisch mit denjenigen für das erste Antriebsrad 14, respektive den ersten Synchronisiermechanimus 57, so dass abkürzend auf obige Beschreibung Bezug genommen wird.

Im Folgenden wird unter besonderer Bezugnahme auf die Figuren 6 bis 9 die Schaltung der erfindungsgemäßen Antriebsanordnung 2 erläutert. Figur 6 zeigt schematisch die Antriebsanordnung 2 mit Elektromotor 3 zum Antreiben der Fahrzeugachse 80. Es sind die Seitenwellen 81, 82 und die hiermit verbundenen Räder 83, 84 der Fahrzeugachse 80 erkennbar.

Wie oben erläutert, weist die Antriebsanordnung 2 eine Zweigangschaltung auf, welche durch einen ersten Leistungspfad und einen funktional parallelen zweiten Leistungspfad gebildet wird. Durch entsprechendes Ansteuern der Schalteinheit 12 kann Drehmoment wahlweise über den ersten Leistungspfad oder alternativ über den zweiten Leistungspfad vom Elektromotor 3 auf das Differential 5 beziehungsweise die Antriebsachse 80 übertragen werden.

In Figur 7 ist die Schalteinheit 12 in Neutralposition (N) gezeigt, welche auch als Leerlaufposition bezeichnet werden kann. Die mit dem Elektromotor 3 antriebsverbundenen Bauteile sind fett dargestellt. Es ist erkennbar, dass die Schaltmuffe 45 in der Neutralposition in einer zentralen Stellung ist. In dieser Position sind der Elektromotor 3 und das Differential 5 voneinander entkoppelt, so dass keine Drehmomentübertragung zwischen den Seitenwellen 81, 82 und dem Elektromotor 3 erfolgen kann. Dies ist beispielsweise erforderlich, wenn das Kraftfahrzeug im Fall einer Panne abgeschleppt werden muss.

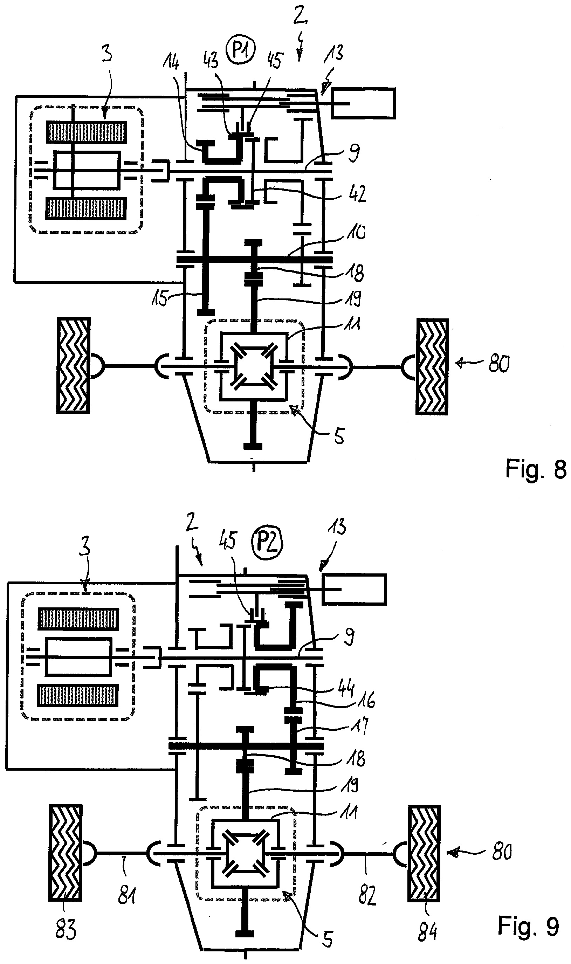

In der ersten Schaltposition (P1), welche in Figur 8 dargestellt ist, ist die Schiebemuffe 45 mit dem ersten Ausgangsteil 43, respektive ersten Antriebsrad 14 drehfest verbunden. Es wird Drehmoment vom Elektromotor 3 auf das Differential 5 über den ersten Leistungspfad übertragen, der fett dargestellt ist. Der erste Leistungspfad umfasst die vom Elektromotor 3 angetriebene Antriebswelle 9, das Eingangsteil 42, das erste Antriebsrad 14, das erste Zwischenrad 15, die Zwischenwelle 10 und das Abtriebsrad 18, das mit dem Ringrad 19 zum Antreiben des Differentials 5 in Verzahnungseingriff ist.

In der zweiten Schaltposition (P2), welche in Figur 9 dargestellt ist, ist die Schiebemuffe 45 mit dem zweiten Ausgangsteil 44, respektive zweiten Antriebsrad 16 gekoppelt, so dass Drehmoment über den zweiten Leistungspfad übertragen wird, der wieder fett dargestellt ist. Der zweite Leistungspfad umfasst die Antriebswelle 9, das Eingangsteil 42, das zweite Antriebsrad 16, das zweite Zwischenrad 17, die Zwischenwelle 10 und das Abtriebsrad 18, das mit dem Ringrad 19 kämmt.

Insgesamt hat die Antriebsanordnung 2 drei Zahnradpaarungen: das erste Antriebsrad 14 und das erste Zwischenrad 15 (erste Zahnradpaarung), das zweite Antriebsrad 16 und das zweite Zwischenrad 17 (zweite Zahnradpaarung), und das Abtriebsrad 18 und das Ringrad 19 (dritte Zahnradpaarung). Je nach Schaltstellung der Schalteinheit 12 erfolgt der Antrieb über die erste oder die zweite Zahnradpaarung, so dass sich zwei Gangschaltstufen ergeben.

Der erste und der zweite Leistungspfad sind funktional parallel angeordnet und haben unterschiedliche Übersetzungen, das heißt die Drehmomentübertragung erfolgt im ersten Leistungspfad mit einem ersten Übersetzungsverhältnis (erster Gang), oder über den zweiten Leistungspfad mit dem zweiten Übersetzungsverhältnis (zweiter Gang). Die Übersetzung des ersten Leistungspfads wird beeinflusst durch die Zahnradpaarung zwischen dem ersten Antriebsrads 14 und dem ersten Zwischenrad 15, wobei die Zähnezahl des ersten Antriebsrads 14 kleiner ist als die des ersten Zwischenrads 15. Das Übersetzungsverhältnis des zweiten Leistungspfads wird beeinflusst von der Zahnradpaarung zwischen dem zweiten Antriebsrad 16 und dem zweiten Zwischenrad 17, das eine größere Zähnezahl hat als das zweite Antriebsrad 16. Es ist ferner erkennbar, dass das erste Antriebsrad 14 eine geringere Zähnezahl aufweist als das zweite Antriebsrad 16 und, dass das erste Zwischenrad 15 eine größere Zähnezahl aufweist als das zweite Zwischenrad 17. Hierdurch ergibt sich, dass das erste Übersetzungsverhältnis (i1 = z15/z14) der ersten Zahnradpaarung (15, 14) größer ist als das zweite Übersetzungsverhältnis (i2 = z17/z16) der zweiten Zahnradpaarung (17, 16). Hieraus folgt, dass das Ringrad 19 bei Drehmomentübertragung über den ersten Leistungspfad (erster Gang) langsamer dreht als bei Drehmomentübertragung über den zweiten Leistungspfad (zweiter Gang).

Eine Besonderheit der erfindungsgemäßen Antriebsanordnung 2 ist, dass die Schalteinheit 12 im Wesentlichen eine axiale Überdeckung mit dem Zwischenwellen-Abtriebsrad 18 hat. Die Überdeckung ist zumindest größtenteils, das heißt der sich axial überdeckende Teil der Schalteinheit 12 und des Abtriebsrads 18 ist größer als der sich nicht überdeckende Teil. Ein radial außen liegender Teil der Schalteinheit 12 überdeckt das erste Zwischenrad 15 und das zweite Zwischenrad 17 in radiale Richtung. Ferner liegt das Ringrad 19 des Differentials 3, respektive die Differentialmittelebene E5 ebenfalls im Bereich axialer Überdeckung mit der Schalteinheit 12. Eine weitere Besonderheit ist, dass die ersten und zweiten Antriebsräder 14, 16 der Schaltstufen koaxial zu der vom Elektromotor 3 angetriebenen Antriebswelle 9 angeordnet sind. Insgesamt werden durch diese Ausgestaltung eine besonders gute Bauraumausnutzung und eine sehr kompakte Baugröße erreicht.

### Bezugszeichenliste

- 2: Antriebsanordnung
- 3: Elektromotor
- 4: Schaltgetriebe
- 5: Differentialgetriebe
- 6: Stator
- 7: Rotor
- 8: Motorwelle
- 9: Antriebswelle
- 10: Zwischenwelle
- 11: Differentialträger
- 12: Schalteinheit
- 13: Aktuator
- 14: erstes Antriebsrad
- 15: erstes Zwischenrad
- 16: zweites Antriebsrad
- 17: zweites Zwischenrad
- 18: Abtriebsrad
- 19: Ringrad
- 20, 20': Lager
- 21, 21': Sitzabschnitt
- 22: Wellenverbindung
- 23: Wellenverbindung
- 24: Lager
- 25: Lager
- 26: Gehäuse
- 27: Radialwellendichtring
- 28: erstes Gehäuseteil
- 29: zweites Gehäuseteil
- 30: Verbindungsmittel
- 31: Sitzabschnitt
- 32: Lager
- 33: Lager
- 34: Lager
- 35: Lager
- 36: Radialwellendichtring
- 37: Radialwellendichtring
- 38: Differentialrad
- 39: Seitenwellenrad
- 40: Seitenwellenrad
- 41: Zapfen
- 42: Eingangsteil
- 43: erstes Ausgangsteil
- 44: zweites Ausgangsteil
- 45: Koppelelement
- 46: Drehantrieb
- 47: Wandlereinheit
- 48: Spindel
- 49: Spindelhülse
- 50: Schaltgabel
- 51: Ring
- 52: Gleitstein
- 53: Ringnut
- 54: Sensor
- 55: Signalgeber
- 56: Schraubverbindung
- 57, 57': Synchronisiermechanismus
- 58, 58': Außenring
- 59, 59': Innenring
- 60, 60': Zwischenring
- 61: Kanal
- 62: Druckstück
- 63: Kugel
- 64: Feder
- 65: Nut
- 66, 66': erster Ring
- 67, 67': Hülsenansatz
- 68: Zulaufanordnung
- 69, 69': Schweißverbindung
- 70: Zuführelement
- 71: Radialspalt
- 72, 72': erste Scheibe
- 73, 73': zweite Scheibe
- 74, 74': Sicherungsring
- 75: Längsbohrung
- 76: Querbohrung
- 77, 77': Querbohrung
- 78: Sicherungsring
- 79: Nut
- 80: Fahrzeugachse
- 81: Seitenwelle
- 82: Seitenwelle
- 83: Rad
- 84: Rad
- 85: Kammer
- 86, 86': Ringspalt

- A: Drehachse
- E: Ebene
- N: Neutralposition
- P1, P2: Schaltpositionen

## Patentansprüche

1. Antriebsanordnung für ein Kraftfahrzeug, mit einem Schaltgetriebe (4) und einem Differentialgetriebe (5),
wobei das Schaltgetriebe (4) eine drehend antreibbare Antriebswelle (9), eine zur Antriebswelle (9) parallele Zwischenwelle (10), mindestens eine erste Schaltstufe und eine zweite Schaltstufe zur Übertragung von Drehmoment von der Antriebswelle (9) auf die Zwischenwelle (10) mit unterschiedlichen Übersetzungsverhältnissen (i1, i2) sowie eine Schalteinheit (12) aufweist, die koaxial zur Antriebswelle (9) angeordnet ist,
wobei die erste Schaltstufe ein auf der Antriebswelle (9) drehbar gelagertes erstes Antriebsrad (14) und ein mit der Zwischenwelle (10) drehfest verbundenes erstes Zwischenrad (15) aufweist, und wobei die zweite Schaltstufe ein auf der Antriebswelle (9) drehbar gelagertes zweites Antriebsrad (16) und ein mit der Zwischenwelle (10) drehfest verbundenes zweites Zwischenrad (17) aufweist,
wobei die Schalteinheit (12) ein Eingangsteil (42), das mit der Antriebswelle (9) drehfest verbunden ist, ein erstes Ausgangsteil (43), das mit dem ersten Antriebsrad (14) drehfest verbunden ist, ein zweites Ausgangsteil (44), das mit dem zweiten Antriebsrad (16) drehfest verbunden ist, und ein Koppelelement (45) aufweist, mit dem das Eingangsteil (42) optional mit dem ersten Ausgangsteil (43) oder dem zweiten Ausgangsteil (44) zur Übertragung eines Drehmoments koppelbar ist,
wobei die Zwischenwelle (10) ein Abtriebsrad (18) zur Übertragung von Drehmoment auf einen Differentialträger (11) des Differentialgetriebes (5) aufweist, wobei eine Drehachse (A11) des Differentialträgers (11) parallel zur Zwischenwelle (10) verläuft,
wobei das Abtriebsrad (18) und die Schalteinheit (12) axial zwischen den mindestens zwei Schaltstufen angeordnet sind,
**dadurch gekennzeichnet,**
**dass** die Antriebswelle (9) eine Längsbohrung (75) sowie zumindest eine Querbohrung (76, 77, 77') zur Schmiermittelversorgung von einem Sitzabschnitt (21, 21', 31) für zumindest eines von dem ersten Antriebsrad (14), dem zweiten Antriebrad (16) und dem Eingangsteil (42) aufweist, wobei an einem Ende der Antriebswelle (9) eine Zulaufanordnung (68) zum Zuführen von Schmiermittel in die Längsbohrung (75) vorgesehen ist, wobei die Zulaufanordnung (68) ein Zuführelement (70) mit einem rohrförmigen Kanal (61), der sich in die Längsbohrung (75) hineinerstreckt, sowie einen in die Längsbohrung (75) eingesetzten Ring (51) aufweist, der ein Rückfließen von in die Längsbohrung (75) befindlichem Schmiermittel verhindert, und
wobei der Sitzabschnitt (31) des Eingangsteils (42) mit Übermaßpassung mit der Antriebswelle (9) drehfest verbunden ist, wobei von der zumindest einen Querbohrung (76, 77, 77') zumindest eine zentrale Querbohrung (76) mit dem Sitzabschnitt (31) des Eingangsteils (42) fluidisch verbunden ist.

2. Antriebsanordnung nach Anspruch 1,
**dadurch gekennzeichnet, dass** der Sitzabschnitt (21, 21') von zumindest einem von dem ersten Antriebsrad (14) und dem zweiten Antriebrad (16) mit der Schalteinheit (12) derart fluidisch verbunden ist, dass Schmiermittel von dem Sitzabschnitt (21, 21') zur Schalteinheit (12) fließen kann.

3. Antriebsanordnung nach einem der Ansprüche 1 oder 2,
**dadurch gekennzeichnet, dass** von der zumindest einen Querbohrungen (76, 77, 77') zumindest eine erste Querbohrung (77) mit dem Sitzabschnitt (21) des ersten Antriebsrads (14) fluidisch verbunden ist und eine zweite Querbohrung (77') mit dem Sitzabschnitt (21') des zweiten Antriebsrads (16) fluidisch verbunden ist.

4. Antriebsanordnung nach einem der Ansprüche 1 bis 3,
**dadurch gekennzeichnet,**
**dass** das erste Antriebsrad (14) mittels eines ersten Lagers (20) auf der Antriebswelle (9) drehbar gelagert ist, wobei das erste Antriebsrad (14) einen ersten Hülsenansatz (67) aufweist, der sich axial in Richtung zum Eingangsteil (42) erstreckt, wobei seitlich benachbart zum ersten Lager (20) zwischen dem ersten Hülsenansatz (67) und der Antriebswelle (9) ein erster Ringspalt (86) vorgesehen ist, durch den Schmiermittel vom Sitzabschnitt (21) des ersten Antriebsrads (14) zur Schalteinheit (12) fließen kann, und
**dass** das zweite Antriebsrad (16) mittels eines zweiten Lagers (20') auf der Antriebswelle (9) drehbar gelagert ist, wobei das zweite Antriebsrad (16) einen zweiten Hülsenansatz (67') aufweist, der sich axial in Richtung zum Eingangsteil (42) erstreckt, wobei seitlich benachbart zum zweiten Lager (20') zwischen dem zweiten Hülsenansatz (67') und der Antriebswelle (9) ein zweiter Ringspalt (86') vorgesehen ist, durch den Schmiermittel vom Sitzabschnitt (21') des zweiten Antriebsrads (16) zur Schalteinheit (12) fließen kann.

5. Antriebsanordnung nach einem der Ansprüche 1 bis 4,
**dadurch gekennzeichnet, dass** das erste Antriebsrad (14) in Richtung zum Eingangsteil (42) gegen eine erste innere Scheibe (72) axial abgestützt ist und in Richtung vom Eingangsteil (42) weg gegen eine erste äußere Scheibe (73) axial abgestützt ist, wobei die erste innere Scheibe (72) zumindest eine Nut (79) aufweist, durch die Schmiermittel vom Sitzabschnitt (21) des ersten Antriebsrads (14) zur Schalteinheit (12) fließen kann, und
dass das zweite Antriebsrad (16) in Richtung zum Eingangsteil (42) gegen eine zweite innere Scheibe (72') axial abgestützt ist und in Richtung vom Eingangsteil (42) weg gegen eine zweite äußere Scheibe (73') axial abgestützt ist, wobei die zweite innere Scheibe (72') zumindest eine Nut (79') aufweist, durch die Schmiermittel vom Sitzabschnitt (21') des zweiten Antriebsrads (16) zur Schalteinheit (12) fließen kann.

6. Antriebsanordnung nach einem der Ansprüche 1 bis 5,
**dadurch gekennzeichnet, dass** genau ein Elektromotor (3) mit einer Motorwelle (8) zum Antreiben der Antriebswelle (9) vorgesehen ist,
wobei die Antriebswelle (9) koaxial zur Motorwelle (8) des Elektromotors (3) angeordnet ist und das Übersetzungsverhältnis zwischen Motorwelle (8) und Antriebswelle (9) eins ist.

7. Antriebsanordnung nach einem der Ansprüche 1 bis 6,
**dadurch gekennzeichnet, dass** für eine Übersetzung von der Antriebswelle (9) auf die Zwischenwelle (10) zumindest eines von Folgendem gilt:
das erste Übersetzungsverhältnis (i1) zwischen erstem Antriebsrad (14) und erstem Zwischenrad (15) liegt zwischen 3,0 und 4,0;
das zweite Übersetzungsverhältnis (i2) zwischen zweitem Antriebsrad (16) und zweitem Zwischenrad (17) liegt zwischen 1,3 und 2,3.

8. Antriebsanordnung nacheinem der Ansprüche 1 bis 7,
**dadurch gekennzeichnet, dass** die Schalteinheit (12) das erste Zwischenrad (15) und das zweite Zwischenrad (17) radial teilweise überdeckt.

9. Antriebsanordnung nach einem der Ansprüche 1 bis 8,
**dadurch gekennzeichnet, dass** zumindest eines von Folgendem gilt:
die Schalteinheit (12) hat zumindest teilweise eine axiale Überdeckung mit dem Abtriebsrad (18) der Zwischenwelle (10),
die Schalteinheit (12) hat zumindest teilweise eine axiale Überdeckung mit einer Differentialmittelebene (E5) des Differentialgetriebes (5), wobei die Differentialmittelebene senkrecht zur Differentialachse (A11) verläuft und eine Differentialradachse (A38) beinhaltet.

10. Antriebsanordnung nach einem der Ansprüche 1 bis 9,
**dadurch gekennzeichnet, dass** das Koppelelement (45) in Form einer Schiebemuffe gestaltet ist, die auf dem Eingangsteil (42) drehfest gehalten und gegenüber diesem mittels eines Aktuators (13) axial verschiebbar ist,
wobei die Schiebemuffe in einer Neutralposition (N) gegenüber dem ersten und zweiten Ausgangsteil (43, 44) frei drehbar ist, in einer ersten Schaltposition (P1) mit dem ersten Ausgangsteil (43) und in einer zweiten Schaltposition (P2) mit dem zweiten Ausgangsteil (44) drehfest verbunden ist.

11. Antriebsanordnung nach Anspruch 10,
**dadurch gekennzeichnet, dass** der Aktuator (13) einen Spindeltrieb umfasst, mit einer drehend antreibbaren Spindel (48) und einer Spindelhülse (49), die mit einem Innengewinde in ein entsprechendes Außengewinde der Spindel eingreift, so dass die Spindelhülse (49) bei Drehung der Spindel (48) axial bewegt wird, wobei an der Spindelhülse (49) eine Schaltgabel (50) befestigt ist, die in eine Ringnut (53) der Schiebemuffe eingreift.

12. Antriebsanordnung nach Anspruch 11,
**dadurch gekennzeichnet, dass** ein Sensor (54) vorgesehen ist, der ein die axiale Position der Spindelhülse (49) repräsentierendes Signal erfassen kann, welches an eine elektronische Regeleinheit zur Steuerung des Spindeltriebs weitergegeben werden kann.

13. Antriebsanordnung nach Anspruch 11 oder 12,
**dadurch gekennzeichnet, dass** Erfassungsmittel vorgesehen sind, welche ein die Kraft zum axialen Bewegen der Spindelhülse (49) repräsentierendes Signal erfassen können, welches an die Regeleinheit zur Steuerung des Spindeltriebs weitergegeben werden kann.

14. Antriebsanordnung nach einem der Ansprüche 1 bis 13,
**dadurch gekennzeichnet, dass** das Abtriebsrad (18) einteilig mit der Zwischenwelle (10) gestaltet ist, wobei das erste Zwischenrad (15) gegen eine erste Seitenfläche des Abtriebsrads (18) axial abgestützt ist und das zweite Zwischenrad (17) gegen eine entgegengesetzt gerichtete zweite Seitenfläche des Abtriebsrads (18) axial abgestützt ist, wobei das Abtriebsrad (18) einen kleineren Durchmesser und eine größere Breite aufweist, als das erste Zwischenrad (15) und zweite Zwischenrad (17).

## Claims

1. A drive assembly for a motor vehicle, having a multi-step transmission (4) and a differential drive (5),
wherein the multi-step transmission (4) comprises a rotatingly drivable driveshaft (9), an intermediate driveshaft (10) arranged parallel to the driveshaft (9), at least a first transmission stage and a second transmission stage for transmitting torque from the driveshaft (9) to the intermediate shaft (10) with different transmission ratios (i1, i2), as well as a shifting unit (12) which is arranged coaxially relative to the driveshaft (9),
wherein the first transmission stage comprises a drive gear (14) rotatably supported on the driveshaft (9) and a first intermediate gear (15) connected to the intermediate shaft (10) in a rotationally fixed manner, and wherein the second transmission stage comprises a second drive gear (16) rotatably supported on the driveshaft (9), and a second intermediate gear (17) connected to the intermediate shaft (10) in rotationally fixed manner,
wherein the shifting unit (12) comprises an input part (42) which is connected to the driveshaft (9) in a rotationally fixed manner, a first output part (43) which is connected to the first drive gear (14) in a rotationally fixed manner, a second output part (44) which is connected to the second drive gear (16) in a rotationally fixed manner, and a coupler (45) by which the input part (42) can optionally be coupled to the first output part (43) or to the second output part (44) for transmitting torque,
wherein the intermediate shaft (10) comprises an output gear (18) for transmitting torque to a differential carrier (11) of the differential drive (5), wherein a rotational axis (A11) of the differential carrier (11) extends parallel to the intermediate shaft (10),
wherein the output gear (18) and the shifting unit (12) are arranged axially between the at least two transmission stages,
**characterised in**
**that** the driveshaft (9) comprises a longitudinal bore (75) and at least one transverse bore (76, 77, 77') for supplying lubricant to a seat portion (21, 21', 31) for at least one of the first drive gear (14), the second drive gear (16) and the input part (42), wherein at one end of the driveshaft (9), a supplying assembly (68) is provided for supplying lubricant into the longitudinal bore (75), wherein the supplying assembly (68) comprises a supplying element (70) with a tubular channel (61) which extends into the longitudinal bore (75), as well as a ring (51) attached in the longitudinal bore (75) which prevents lubricant from returning out of the longitudinal bore (75), and
wherein the seat portion (31) of the input part (42) is connected to the driveshaft (9) in a rotationally fixed manner with an interference fit, wherein of the at least one transverse bore (76, 77, 77') at least one central bore (76) is fluidically connected with the seat portion (31) of the input part (42).

2. Drive assembly according to claim 1,
**characterised in that** the seat portion (21, 21') of at least one of the first drive gear (14) and the second drive gear (16) is fluidically connected to the shift unit (12) such that lubricant can flow from the seat portion (21, 21') to the shift unit (12).

3. Drive assembly according to one of claims 1 or 2,
**characterised in that** of the at least one transverse bore (76, 77, 77') at least one first transverse bore (77) is fluidically connected to the seat portion (21) of the first drive gear (14) and that a second transverse bore (77') is fluidically connected to the seat portion (21') of the second drive gear (16).

4. Drive assembly according to any one of claims 1 to 3,
**characterised in**
**that** the first drive gear (14) is rotationally supported on the driveshaft (9) by a first bearing (20), wherein the first drive gear (14) comprises a first sleeve projection (67) which axially extends towards the input part (42), wherein a first annular gap (86) is provided laterally adjoining the first bearing (20), between the first sleeve projection (67) and the driveshaft (9), through which first annular gap (86) lubricant can flow from the seat portion (21) of the first drive gear (14) to the shifting unit (12), and
**that** the second drive gear (16) is rotationally supported on the driveshaft (9) by a second bearing (20'), wherein the second drive gear (16) comprises a second sleeve projection (67') which axially extends towards the input part (42), wherein a second annular gap (86') is provided laterally adjoining the second bearing (20'), between the second sleeve projection (67') and the driveshaft (9), through which second annular gap (86') lubricant can flow from the seat portion (21') of the second drive gear (16) to the shifting unit (12) .

5. Drive assembly according to any one of claims 1 to 4,
**characterised in that** the first drive gear (14) is axially supported towards the input part (42) against a first inner disc (72) and away from the input part (42) against a first outer disc (73), wherein the first inner disc (72) comprises at least one groove (79) trough which lubricant can flow from the seat portion (21) of the first drive gear (14) to the shifting unit (12), and
that the second drive gear (16) is axially supported towards the input part (42) against a second inner disc (72') and away from the input part (42) against a second outer disc (73'), wherein the second inner disc (72') comprises at least one groove (79') through which lubricant can flow from the seat portion (21') of the second drive gear (16) to the shifting unit (12).

6. Drive assembly according to any one of claims 1 to 5,
**characterised in that** exactly one electric motor (3) with a motor shaft (8) is provided for driving the driveshaft (9), wherein the driveshaft (9) is arranged coaxially relative to the motor shaft (8) of the electric motor (3) and wherein the transmission ratio between the motor shaft (8) and the driveshaft (9) is one.

7. Drive assembly according to any one of claims 1 to 6,
**characterised in that** at least one of the following applies with regard to a transmission from the driveshaft (9) to the intermediate shaft (10):
the first transmission ratio (i1) between the first drive gear (14) and the first intermediate gear (15) is between 3.0 and 4.0;
the second transmission ratio (i2) between the second drive gear (16) and the second intermediate gear (17) is between 1.3 to 2.3.

8. Drive assembly according to any one of claims 1 to 7, **characterised in that** the shifting unit (12) partially radially overlaps the first intermediate gear (15) and the second intermediate gear (17).

9. Drive assembly according to any one of claims 1 to 8,
**characterised in that** at least one of the following applies: the shifting unit (12) has at least partially an axial overlap with a central differential plane (E5) of the differential drive (5), wherein the central differential plane extends perpendicularly to the differential axis (A11) and contains a differential gear axis (A38).

10. Drive assembly according to any one of claims 1 to 9,
**characterised in that** the coupler (45) is provided in the form of a sliding sleeve, which is held on the input part (42) in a rotationally fixed manner and is axially movable relative to same by means of an actuator (13),
wherein the sliding sleeve is in a neutral position (N) freely rotatable relative to the first and to the second output part (43, 44), is in a first transmission position (P1) connected to the first output part (43) in a rotationally fixed manner, and is in a second transmission position (P2) connected to the second output part (44) in a rotationally fixed manner.

11. Drive assembly according to claim 10,
**characterised in that** the actuator (13) comprises a spindle drive, with a rotatationally drivable spindle (48) and a spindle sleeve (49) which, with an inner thread engages a corresponding outer thread of the spindle, so that the spindle sleeve (49) is axially moved when the spindle (48) rotates, wherein a switch fork (50) is fixed at the spindle sleeve (49) which switch fork engages an annular groove (53) of the sliding sleeve.

12. Drive assembly according to claim 11,
**characterised in that** a sensor (54) is provided which is configured to detect a signal representing the position of the spindle sleeve (49), which signal can be transmitted to an electronic control unit for controlling the spindle drive.

13. Drive assembly according to claim 11 or 12,
**characterised in that** there are provided detecting means which are configured to detect a signal representing the force for axially moving the spindle sleeve (49), which signal is transmitted to the control unit for controlling the spindle drive.

14. Drive assembly according to any one of claims 1 to 13,
**characterised in that** the output gear (18) is integrally formed with the intermediate shaft (10), wherein the first intermediate gear (15) is axially supported against a first side face of the output gear (18) and the second intermediate gear (17) is axially supported against a second side face of the output gear (18) facing in an opposite direction, wherein the output gear (18) comprises a smaller diameter and a greater width than the first intermediate gear (15) and the second intermediate gear (17).

## Revendications

1. Ensemble d'entraînement pour un véhicule à moteur, comprenant une boîte de vitesses (4) et un engrenage différentiel (5),
dans lequel la boite de vitesses (4) présente un arbre d'entraînement (9) pouvant être entraîné en rotation, un arbre intermédiaire (10) parallèle à l'arbre d'entraînement (9), au moins un premier cran de vitesse et un second cran de vitesse pour transmettre le couple de rotation de l'arbre d'entraînement (9) à l'arbre intermédiaire (10) avec différents rapports de translation (i1, i2) ainsi qu'une unité de transmission (12) qui est agencée coaxialement à l'arbre d'entraînement (9),
dans lequel le premier cran de vitesse présente une première roue motrice (14) montée rotative sur l'arbre d'entraînement (9) et une première roue intermédiaire (15) reliée solidaire en rotation à l'arbre intermédiaire (10), et dans lequel le second cran de vitesses présente une seconde roue motrice (16) montée rotative sur l'arbre d'entraînement (9) et une seconde roue intermédiaire (17) reliée solidaire en rotation à l'arbre intermédiaire (10),
dans lequel l'unité de transmission (12) présente une pièce d'entrée (42) qui est reliée solidaire en rotation à l'arbre d'entraînement (9), une première pièce de sortie (43) qui est reliée solidaire en rotation à la première roue motrice (14), une seconde pièce de sortie (44) qui est reliée solidaire en rotation à la seconde roue motrice (16), et un élément de couplage (45) avec lequel la pièce d'entrée (42) peut être couplée en option avec la première pièce de sortie (43) ou la seconde pièce de sortie (44) pour transmettre un couple de rotation,
dans lequel l'arbre intermédiaire (10) présente une roue de sortie (18) pour transmettre le couple de rotation à un support de différentiel (11) de l'engrenage différentiel (5),
dans lequel un axe de rotation (A11) du support de différentiel (11) est parallèle à l'arbre intermédiaire (10),
dans lequel la roue de sortie (18) et l'unité de transmission (12) sont disposées axialement entre les aux moins deux crans de vitesses,
**caractérisé en ce que**
l'arbre d'entraînement (9) présente un alésage longitudinal (75) ainsi qu'au moins un alésage transversal (76, 77, 77') pour l'alimentation en lubrifiant d'un tronçon de siège (21, 21', 31) pour au moins une de la première roue motrice (14), de la seconde roue motrice (16) et de la partie d'entrée (42), dans lequel un agencement d'alimentation (68) pour alimenter du lubrifiant dans l'alésage longitudinal (75) est prévu à une extrémité de l'arbre d'entraînement (9), dans lequel l'agencement d'alimentation (68) présente un élément d'alimentation (70) avec un canal tubulaire (61) qui s'étend jusque dans l'alésage longitudinal (75), ainsi qu'une bague (51) insérée dans l'alésage longitudinal (75) qui empêche un retour de lubrifiant se trouvant dans l'alésage longitudinal (75),
dans lequel le tronçon de siège (31) de la pièce d'entrée (42) est relié solidaire en rotation par ajustement forcé avec l'arbre d'entraînement (9), dans lequel de l'au moins un alésage transversal (76, 77, 77'), au moins un alésage transversal central (76) est relié de manière fluidique au tronçon de siège (31) de la pièce d'entrée (42).

2. Ensemble d'entraînement selon la revendication 1, **caractérisé en ce que** le tronçon de siège (21, 21') d'au moins une de la première roue d'entraînement (14) et de la seconde roue d'entraînement (16) est relié de manière fluidique à l'unité de transmission (12) de telle façon que du lubrifiant peut s'écouler du tronçon de siège (21, 21') vers l'unité de transmission (12).

3. Ensemble d'entraînement selon l'une des revendications 1 ou 2, **caractérisé en ce que** de l'au moins un alésage transversal (76, 77, 77'), au moins un premier alésage transversal (77) est relié de manière fluidique au tronçon de siège (21) de la première roue motrice (14) et un second alésage transversal (77') est relié de manière fluidique au tronçon de siège (21') de la seconde roue motrice (16).

4. Ensemble d'entraînement selon l'une des revendications 1 à 3, **caractérisé en ce que** la première roue motrice (14) est agencée rotative sur l'arbre d'entraînement (9) au moyen d'un premier palier (20), dans lequel la première roue motrice (14) présente un premier épaulement de manchon (67) qui s'étend axialement en direction de la pièce d'entrée (42), dans lequel dans le voisinage latéral du premier palier (20), une première fente annulaire (86) est prévue entre le premier épaulement de manchon (67) et l'arbre d'entraînement (9), à travers laquelle du lubrifiant peut circuler du tronçon de siège (21) de la première roue motrice (14) vers l'unité de transmission (12), et
que la seconde roue motrice (16) est agencée rotative sur l'arbre d'entraînement (9) au moyen d'un second palier (20'), dans lequel la seconde roue motrice (16) présente un second épaulement de manchon (67') qui s'étend axialement en direction de la pièce d'entrée (42), dans lequel dans le voisinage latéral du second palier (20'), une seconde fente annulaire (86') est prévue entre le second épaulement de manchon (67') et l'arbre d'entraînement (9), à travers laquelle du lubrifiant peut circuler du tronçon de siège (21') de la seconde roue motrice (16) vers l'unité de transmission (12).

5. Ensemble d'entraînement selon l'une des revendications 1 à 4, **caractérisé en ce que** la première roue motrice (14) est appuyée axialement en direction de la pièce d'entrée (42) contre un premier disque intérieur (72) et appuyée axialement en direction de la pièce d'entrée (42) éloignée contre un premier disque extérieur (73), dans lequel le premier disque intérieur (72) présente au moins une rainure (79) à travers laquelle du lubrifiant peut circuler du tronçon de siège (21) de la première roue motrice (14) vers l'unité de transmission (12), et
que la seconde roue motrice (16) est appuyée axialement en direction de la pièce d'entrée (42) contre un second disque intérieur (72') et appuyée axialement en direction de la pièce d'entrée (42) éloignée contre un second disque extérieur (73'), dans lequel le second disque intérieur (72') présente au moins une rainure (79') à travers laquelle du lubrifiant peut circuler du tronçon de siège (21') de la seconde roue motrice (16) vers l'unité de transmission (12).

6. Ensemble d'entraînement selon l'une des revendications 1 à 5, **caractérisé en ce que** précisément un moteur électrique (3) avec un arbre moteur (8) est prévu pour entraîner l'arbre d'entraînement (9),
dans lequel l'arbre d'entraînement (9) est agencé coaxialement à l'arbre moteur (8) du moteur électrique (3) et le rapport de translation entre l'arbre moteur (8) et l'arbre d'entraînement (9) est de un.

7. Ensemble d'entraînement selon l'une des revendications 1 à 6, **caractérisé en ce que** pour une translation de l'arbre d'entraînement (9) à l'arbre intermédiaire (10), vaut au moins un de ce qui suit :
le premier rapport de translation (i1) entre la première roue de sortie (14) et la première roue intermédiaire (15) est situé entre 3 et 4 ;
le second rapport de translation (i2) entre la seconde roue de sortie (16) et la seconde roue intermédiaire (17) est entre 1,3 et 2,3.

8. Ensemble d'entraînement selon l'une des revendications 1 à 7, **caractérisé en ce que** l'unité de transmission (12) recouvre radialement en partie la première roue intermédiaire (15) et la seconde roue intermédiaire (17) .

9. Ensemble d'entraînement selon l'une des revendications 1 à 8, **caractérisé en ce que** vaut au moins un de ce qui suit :
l'unité de transmission (12) a au moins partiellement un recouvrement axial avec la roue de sortie (18) de l'arbre intermédiaire (10),
l'unité de transmission (12) a au moins partiellement un recouvrement axial avec un plan médian de différentiel (E5) de l'engrenage différentiel (5), dans lequel le plan médian de différentiel est orthogonal à l'axe de différentiel (A11) et contient un axe de roue à différentiel (A38).

10. Ensemble d'entraînement selon l'une des revendications 1 à 9, **caractérisé en ce que** l'élément de couplage (45) a la forme d'un manchon poussoir qui est maintenu solidaire en rotation sur la pièce d'entrée (42) et peut être poussé axialement par rapport à celle-ci au moyen d'un actionneur (13),
dans lequel le manchon poussoir peut tourner librement dans une position neutre (N) par rapport à la première et à la seconde pièce de sortie (43, 44), est relié solidaire en rotation avec la première pièce de sortie (43) dans une première position de vitesse (P1) et avec la seconde pièce de sortie (44) dans une seconde position de vitesse (P2).

11. Ensemble d'entraînement selon la revendication 10,
**caractérisé en ce que** l'actionneur (13) comprend un entraînement à broche avec une broche (48) pouvant être entraînée en rotation et un manchon de broche (49) qui s'engrène avec un filet femelle dans un filet mâle correspondant de la broche, de façon à ce que le manchon de broche (49) soit déplacé axialement lors de la rotation de la broche (48), dans lequel une fourche de transmission (50) est fixée sur le manchon de broche (49), laquelle s'engrène dans une rainure annulaire (53) du manchon de broche.

12. Ensemble d'entraînement selon la revendication 11, **caractérisé en ce qu'**un capteur (54) est prévu qui peut détecter un signal représentant une position axiale du manchon de broche (49), lequel peut être transmis à une unité de réglage électronique pour commander l'entraînement par broche.

13. Ensemble d'entraînement selon la revendication 11 ou 12,
**caractérisé en ce que** des moyens de détection sont prévus qui peuvent détecter un signal représentant la force pour le déplacement axial du manchon de broche (49), lequel peut être transmis à l'unité de réglage pour commander l'entraînement par broche.

14. Ensemble d'entraînement selon l'une des revendications 1 à 13,
**caractérisé en ce que** la roue de sortie (18) est conçue d'une seule pièce avec l'arbre intermédiaire (10), dans lequel la première roue intermédiaire (15) est appuyée axialement contre une première face latérale de la roue de sortie (18) et la seconde roue intermédiaire (17) est appuyée axialement contre une seconde face latérale dirigée opposée de la roue de sortie (18), dans lequel la roue de sortie (18) présente un diamètre plus petit et une largeur plus grande que la première roue intermédiaire (15) et la seconde roue intermédiaire (17).
